# EUROPÄISCHE PATENTSCHRIFT

(11) **EP 0 395 964 B1**
(45) Veröffentlichungstag und Bekanntmachung des Hinweises auf die Patenterteilung: **14.04.1993**
(21) Anmeldenummer: 90107583.8
(22) Anmeldetag: 20.04.1990
(51) Int. Cl.: B30B 15/00, F16H 15/22

(54) **Vorrichtung für den Massenkraftausgleich in einer Maschine mit Kurbeltrieb, insbesondere einer Stanzmaschine**
Apparatus for balancing inerta forces in a crank operated machine, in particular a punching machine
Dispositif pour l'équilibrage des forces dues aux masses dans une machine à manivelle, notamment une machine à poinçonner

(30) Priorität: 03.05.1989 CH 1691/89
(43) Veröffentlichungstag der Anmeldung: 07.11.1990
(73) Patentinhaber: BRUDERER AG, CH-9320 Frasnacht-Arbon (CH)
(72) Erfinder: Eigenmann, Oskar, CH-9320 Arbon (CH)
(74) Vertreter: Blum, Rudolf Emil Ernst

(56) Entgegenhaltungen:
- CH-A- 427 442
- DE-A- 2 534 626
- FR-A- 2 095 092
- FR-A- 2 158 845
- NL-A- 6 908 243

## Beschreibung

Die vorliegende Erfindung betrifft eine Vorrichtung für den Massenkraftausgleich in einer einen Kurbeltrieb mit Pleueln aufweisenden Maschine, insbesondere einer Stanzmaschine mit beidseitig des Kurbeltriebes angeordneten Ausgleichsgewichten, bei welcher Maschine erste Pleuel mit einem Ende von einarmigen Hebeln gelenkig verbunden sind, deren anderes Ende jeweils gelenkig am Maschinengehäuse abgestützt ist und jeweils ein Zwischenlager aufweisen, das über Drucksäulen mit dem Stössel der Maschine gelenkig verbunden ist, welche Ausgleichsgewichte zum Ausgleich der oszillierenden und der in der Hubrichtung der Maschine gerichteten Komponente der rotierenden Massenkräfte bei einem Ende an im Maschinengehäuse schwenkbar gelagerten Umlenkhebeln angelenkt sind, die ihrerseits beim jeweils entgegengesetzten Ende an dieselben antreibenden zweiten Pleueln angelenkt sind. Eine solche Maschine ist in DE-A-2534 626 gezeigt.

Bei bekannten solchen Stanzmaschinen sind die oszillierenden Ausgleichsgewichte üblicherweise über ein oder mehrere Gestängeglieder an einem Bauteil der Maschine angelenkt, der bzw. die zwischen den Kurbeltrieb und dem Stössel wirken und entsprechend auf denselben Arbeitskräfte und Bewegungen überträgt, bzw. übertragen. Die genannten Gestängeglieder können beispielsweise als im Maschinengehäuse schwenkbar gelagerte Umlenkhebel ausgebildet sein, welche die Bewegungsrichtung bei ihrer Anlenkstelle am Kraft und Bewegungen übertragenden Bauteil zum ausgleichenden Oszillieren der Ausgleichsgewichte umkehren. Offensichtlich treten in allen Bauteilen, die dem Massenkraftausgleich in der jeweiligen Maschine zugeordnet sind, Massenkräfte und Schwingungen auf, welche durch die genannte Antriebsanordnung direkt auf das Kraft und Bewegungen übertragende Glied übertragen werden und damit auch auf den Stössel der Maschine übertragen werden. Damit wird jedoch der Bewegungsablauf des Stössels bezüglich dem Schneid- oder Prägevorgang ungünstig beeinflusst, so dass die Güte des durch die Stanzmaschine geformten Erzeugnisses beeinträchtigt werden kann.

Hier will die Erfindung Abhilfe schaffen. Die Erfindung, wie sie in den Ansprüchen gekennzeichnet ist, löst die Aufgabe, eine Vorrichtung für den Massenkraftausgleich in einer Maschine mit Kurbeltrieb, insbesondere eine Stanzmaschine zu schaffen, bei der die Ausgleichsgewichte über Lenker und Umlenkhebel ausschliesslich am Maschinengehäuse und der Exzenterbüchse gelagert sind.

Der durch die Erfindung erreichte Vorteil ist im wesentlichen darin zu sehen, dass die Massenkräfte und Schwingungen der Ausgleichsgewichte und dieselben antreibenden Vorrichtungsteile nicht auf den Stössel übertragen werden.

Im folgenden wird die Erfindung anhand von lediglich einen Lösungsweg darstellenden Zeichnungen näher erläutert.

Es zeigen:
Fig. 1 einen Längsschnitt durch eine Stanzmaschine mit einer gemäss der Erfindung ausgebildeten Vorrichtung für den Massenkraftausgleich,
Fig. 2 einen Schnitt entlang der Linie II-II der Fig. 1,
Fig. 3 einen Schnitt entlang der Linie III-III der Fig. 1, in einem vergrösserten Massstab gezeichnet,
Fig. 4 einen Schnitt entlang der Linie IV-IV der Fig. 1, in einem vergrösserten Massstab gezeichnet, und
Fig. 5 eine Detailansicht der Parallelführung des Pleuelbolzens.

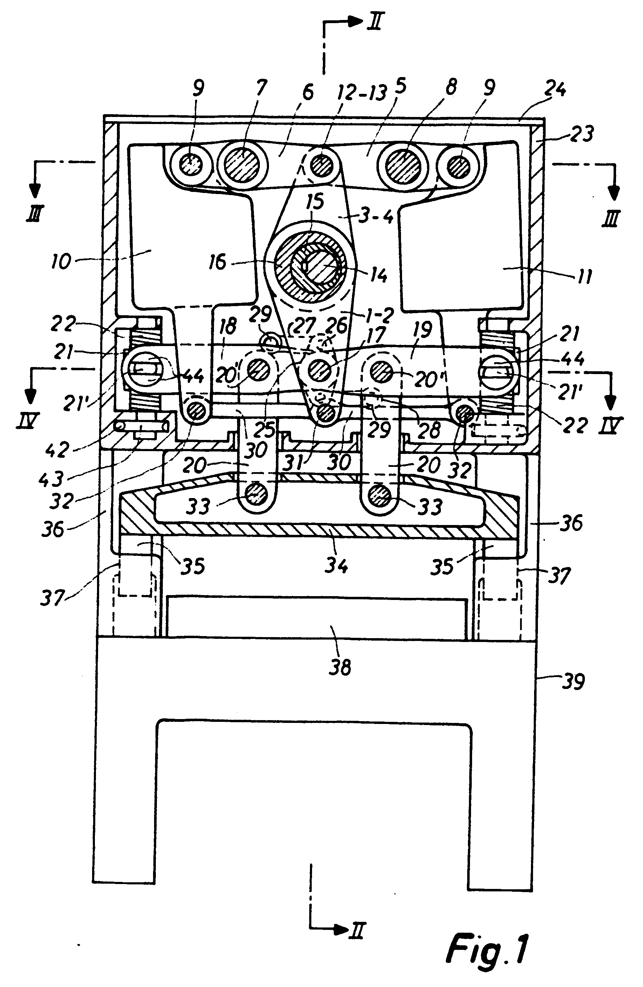

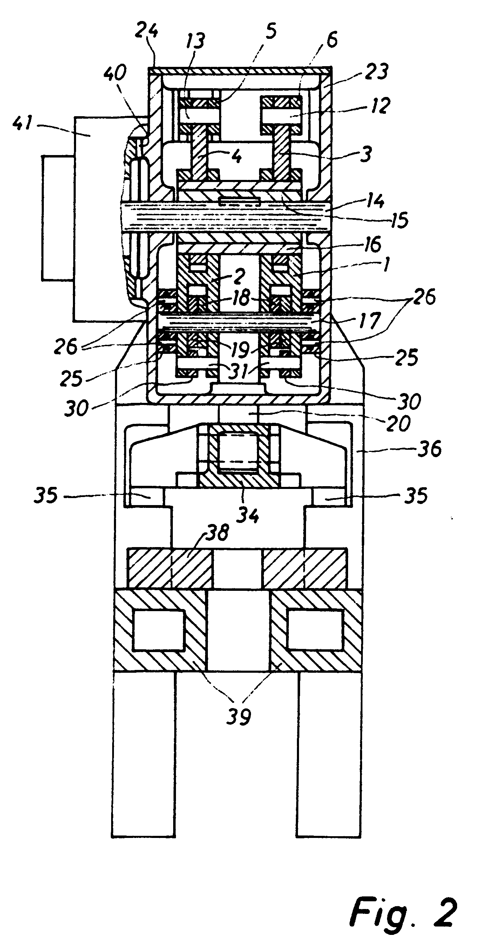

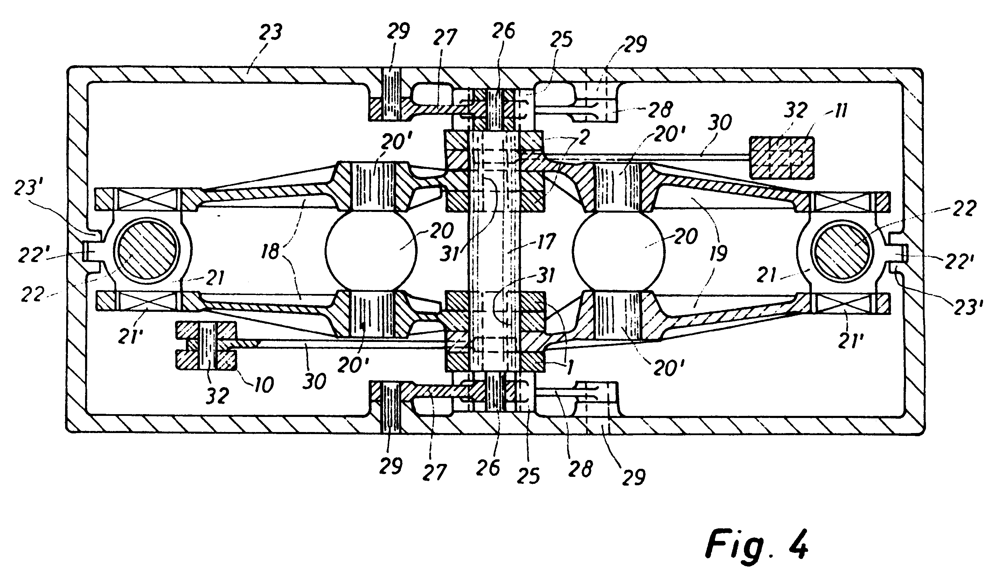

Die in den Figuren 1 und 2 gezeichnete Kurbelwelle 14 der Stanzmaschine ist beidseitig im Maschinengehäuse 23 gelagert. Diese Kurbelwelle 14 ist beispielsweise durch eine bekannte Kupplungs-/Bremsvorrichtung angetrieben, von welcher in der Fig. 2 rein beispielsweise eine Bremsscheibe 40 und das diese Vorrichtung umgebende Gehäuse 41 gezeichnet sind, in welchem möglicherweise auch das Schwungrad und die Kupplung der Stanzmaschine angeordnet ist. Auf der Kurbelwelle 14 ist, wie insbesondere aus der Fig. 1 ersichtlich ist, ein Exzenter 15 angeordnet, der von einer für die Hubverstellung der Maschine übliche und bekannte Exzenterbüchse 16 umgeben ist. Auf dieser Exzenterbüchse 16 sind die nachfolgend als erste Pleuel 1, 2 bezeichneten Pleuel zum Antrieb des Stössels 34 gelagert. Diese ersten Pleuel 1, 2 übertragen ihre Bewegung über einen noch später zu erläuternden parallel geführten Pleuelbolzen 17 auf einarmige Hebelpaare 18, 19. Bei dem vom Pleuelbolzen 17 entfernternen Ende sind diese einarmigen Hebel 18, 19 über Gewindespindeln 22 im Maschinengehäuse 23 gelagert, welche Gewindespindeln 22 in der Fig. 4 im Schnitt gezeichnet sind. Auf den Gewindespindeln 22 sind Spindelmuttern 21 mit Lagerbolzen 21′ aufgeschraubt. Die Lagerbolzen 21′ ragen zwischen Lagersegmenten 44 in den jeweiligen Hebeln 18, 19, derart, dass diese Hebel 18, 19 bei diesen Enden relativ zu den Gewindespindeln 22 schwenkbar und längsverschiebbar gelagert sind. Die in der Fig. 4 gezeigten Vorsprünge 22′ der Spindelmutter 21 ragen zwischen Vorsprünge 23′ des Maschinengehäuses 23, so dass die Spindelmutter 21 gegen ein Verdrehen auf der Spindel 22 geführt und in Höhenrichtung der Maschine längs verschiebbar ist. Die Gewindespindeln 22 lassen sich mittels synchron angetriebenen Schneckengetrieben 42, 43 in bekannter Weise drehen, womit die Spindelmuttern 21 linear verschoben werden. Je nach der Verschiebestellung dieser Spindelmuttern 21 wird die Stellung des Stössels 34 relativ zur Werkzeugaufspannplatte 38 verändert.

An einer Stelle zwischen den Pleuelbolzen 17 und der Lagerstelle der Hebel 18, 19 an den Gewindespindeln 22 sind Drucksäulen 20 über Lagerzapfen 21′ an den genannten Hebeln 18, 19 angelenkt. Am entgegengesetzten Ende sind diese Drucksäulen 20 über Lagerzapfen 33 am Stössel 34 angelenkt. Dieser Stössel 34, bzw. der sich zwischen demselben und der Werkzeugaufspannplatte 38 vorhandene Zwischenraum ist zwischen den Stützsäulen 36 des Maschinengehäuses 23 zugänglich, welche Stützsäulen 36 den Maschinengehäuseoberteil mit dem Maschinengehäuseunterteil 39 verbinden.

Der Stössel weist Führungssäulen 35 auf, welche in Führungen 37 des Maschinengehäuses geführt sind, so dass der Stössel 34 in seiner horizontalen Ebene geführt ist.

Durch die erwähnten Anlenkstellen der einarmigen Hebel 18, 19 wird die Vertikalbewegung der ersten Pleuel 1, 2 entsprechend dem Hebelverhältnis an den Hebeln 18, 19 verkleinert auf den Stössel 34 übertragen.

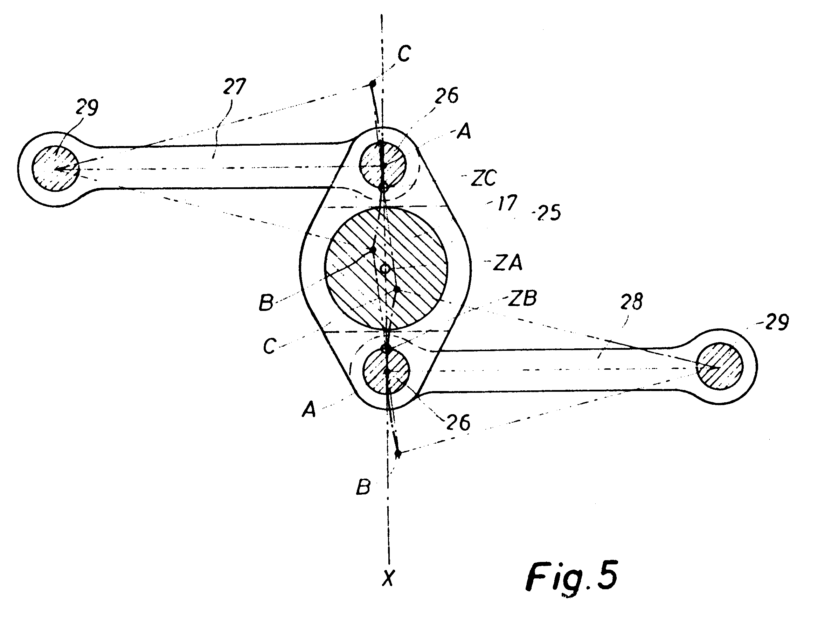

Die Parallelführung des Pleuelbolzens 17 erfolgt nicht in einer Gleitführung, sondern über die in der Fig. 5 im vergrösserten Massstab gezeichnete Vorrichtung, die sowohl in den Fig. 1, 2 als auch in der Fig. 4 dargestellt ist. Auf den Pleuelbolzen 17 sind beiderends ein Umschlaghebel 25 aufgesetzt. Dieser ist an seinen diametral gegenüberliegenden Enden über Zapfen 26 mit Lenkern 27, 28 gelenkig verbunden. Diese Lenker 27, 28 sind ihrerseits auf Bolzen 29 schwenkbar gelagert, welche im Maschinengehäuse 23 fest gelagert sind.

In der Fig. 5 ist die Mittelstellung dieser Teile gezeigt. Dabei bedeutet ZA die Mittelstellung der Längsachse des Pleuelbolzens 17, und die Schwenkachsen der am Umschlaghebel 25 angelenkten Lenker 27, 28 sind sowohl oben als auch unten in der Fig. 5 mit A angedeutet. Erfolgt nun eine entlang der Geraden X nach oben gerichtete Bewegung, verschieben sich die zwei Punkte A der Schwenkstellen der Zapfen 26 entlang eines Kreisbogenabschnittes aufwärts in die Stellung C. Dabei bewegt sich nun die Längsachse ZA in die Stellung ZC. Während der in entgegengesetzter Richtung verlaufenden Abwärtsbewegung verschieben sich die Punkte A in die Stellungen B und die Längsachse ZA in die Stellung ZB. Damit ist eine mindestens annähernd parallele Verschiebung des Zentrumpunktes Z des Kurbelzapfens 17 über den gesamten Hubbereich der Stanzpresse sichergestellt.

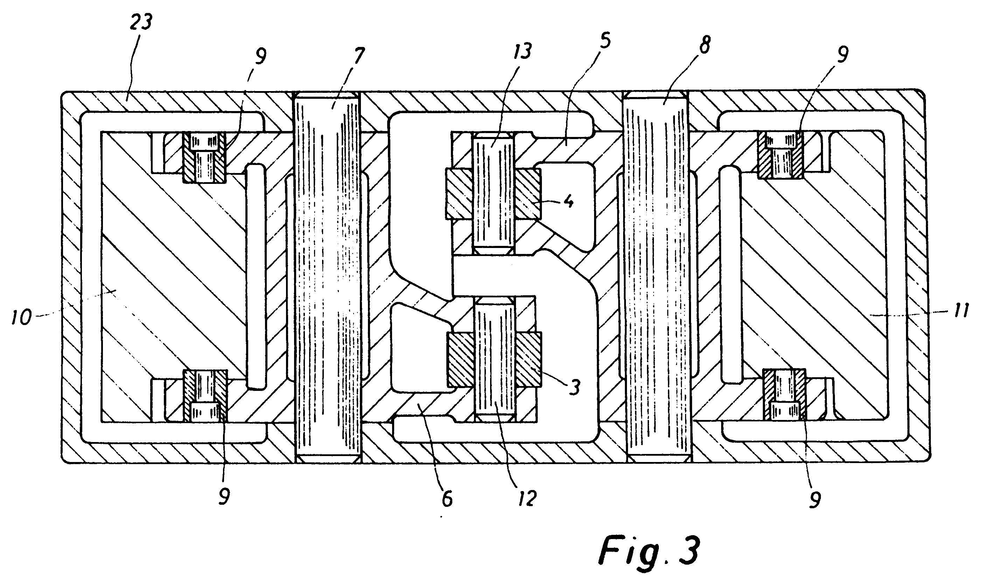

Zurückkehrend zu Fig. 1 wird nun der Antrieb der Ausgleichsgewichte 10, 11 erklärt. Auf der Exzenterbüchse 16 sind zweite Pleuel 3, 4 gelagert. Dabei sind die ersten Pleuel 1, 2, wie aus der Fig. 2 ersichtlich ist, gegabelt ausgebildet und die zweiten Pleuel 3, 4 zwischen den Wangen der Gabelung der ersten Pleuel auf der Exzenterbüchse 16 gelagert, welche somit sämtliche vier Pleuel 1-4 gemeinsam trägt. Die zweiten Pleuel 3, 4 verlaufen gegen den Gehäusedeckel 24 aufwärts und sind über Bolzen 12, 13 an jeweils einem Umlenkhebel 5, 6 angelenkt, wobei diese Umlenkhebel 5, 6 in der Fig. 3 im Horizontalschnitt gezeichnet sind. Diese zwei Umlenkhebel 5, 6 sind über Wellen 7, 8 im Maschinengehäuse 23 schwenkbar gelagert. Das von den Bolzen 12, 13 entfernte Ende der Umlenkhebel 5, 6 ist über jeweilige Bolzen 9 an den Ausgleichsgewichten 10, 11 angelenkt. Es ist nun offensichtlich, dass die so-eben beschriebenen Bauteile eine Bewegung der Ausgleichsgewichte 10, 11 bewirken, welche die (in vertikaler Richtung gerichteten) oszillierenden Massenkräfte ausgleichen.

Am entgegengesetzten Ende der Ausgleichsgewichte 10, 11 sind Lenker 30 über die Bolzen 32 angelenkt. Beim ihrerseits entgegengesetzten Ende sind die Lenker 30 über einem Bolzen 31 (siehe auch Fig. 2) an den ersten Pleueln 1, 2 angelenkt. Zu bemerken ist, dass die Lenker 30 somit an einem jeweiligen ersten Pleuel 1, 2 bei einer relativ zur Anlenksstelle (Pleuelbolzen 17) der einarmigen Hebel 18, 19 zur Kurbelwelle 14 in entgegengesetzter Stelle an den ersten Pleueln 1, 2 angelenkt sind, wozu diese Pleuel 1, 2 entsprechend eine über die Lagerstelle des Pleuelbolzens 17 hinaus verlaufende Verlängerung aufweisen. Damit wird die seitliche Auslenkung der rotierenden Massen von Exzenter 15 und Exzenterbüchse 16 sowie die seitliche Auslenkung der entsprechenden Massenanteile der Pleuel 1-4 durch die Umkehrbewegung aufgrund des seitlichen horizontalen Ausweichens der Ausgleichsgewichte 10, 11 ausgeglichen.

Dadurch, dass die Ausgleichsgewichte 10, 11 sowie die damit verbundenen bzw. zum Antrieb derselben dienenden Teile in keiner Weise mit Bauteilen verbunden sind, welche Kräfte und Bewegungen direkt auf den Stössel 34 übertragen, z.B. nicht mehr mit den einarmigen Hebeln 18, 19, werden die eine Masshaltigkeit und Güte des erzeugten Produktes beeinträchtigenden Schwingungen und Massenkräfte vom Stössel 34 ferngehalten.

## Patentansprüche

1. Vorrichtung für den Massenkraftausgleich in einer einen Kurbeltrieb mit Pleueln aufweisenden Maschine, insbesondere einer Stanzmaschine mit beidseitig des Kurbeltriebes angeordneten Ausgleichsgewichten (10, 11), bei welcher Maschine erste Pleuel (1, 2) mit einem Ende von einarmigen Hebeln (18, 19) gelenkig verbunden sind, deren anderes Ende jeweils gelenkig am Maschinengehäuse (23) abgestützt ist und jeweils ein Zwischenlager (20′) aufweisen, das über Drucksäulen (20) mit dem Stössel (34) der Maschine gelenkig verbunden ist, welche Ausgleichsgewichte (10, 11) zum Ausgleich der oszillierenden und der in der Hubrichtung der Maschine gerichteten Komponente der rotierenden Massenkräfte bei einem Ende an im Maschinengehäuse (23) schwenkbar gelagerten Umlenkhebeln (5, 6) angelenkt sind, die ihrerseits beim jeweils entgegengesetzten Ende an dieselben antreibenden zweiten Pleueln (3, 4) angelenkt sind, dadurch gekennzeichnet, dass zum Ausgleich der quer zur Hubrichtung gerichteten Komponente der rotierenden Massenkräfte die Ausgleichsgewichte (10, 11) zur Ausführung einer quer zur Hubrichtung oszillierenden Bewegung beim entgegengesetzten Ende über jeweils einen Lenker (30) an einem jeweiligen ersten Pleuel (1, 2) bei einer relativ zur Anlenkstelle der einarmigen Hebel (18, 19) zum Kurbeltrieb entgegengesetzten Stelle des dazu verlängerten ersten Pleuels (1, 2) angelenkt sind, dass jeder Umlenkhebel (5, 6) an jeweils einem eigenen zweiten Pleuel (3, 4) angelenkt ist, so dass die Umlenkhebel (5, 6) unabhängig voneinander angetrieben sind, und dass alle ersten und zweiten Pleuel (1-4) auf einer gemeinsamen Exzenterbüchse (16) des Kurbeltriebes gelagert sind.

2. Vorrichtung nach Anspruch 1, dadurch gekennzeichnet, dass die ersten Pleuel (1, 2) bei dem auf der gemeinsamen Exzenterbüchse (16) gelagerten Abschnitt gegabelt und die zweiten Pleuel (3, 4) jeweils zwischen den durch die Gabelung vorhandenen Wangen der ersten Pleuel (1, 2) auf der Exzenterbüchse (16) gelagert sind.

3. Vorrichtung nach Anspruch 1 oder 2, dadurch gekennzeichnet, dass die ersten Pleuel (1, 2) zur Parallelführung auf einem Pleuelbolzen (17) gelagert sind, an welchem das eine Ende der jeweiligen einarmigen Hebel (18, 19) angelenkt ist, welcher Pleuelbolzen (17) beidseitig in jeweils einem Umschlaghebel (25) gelagert ist, welche bei diametral gegenüberliegenden Enden an jeweils einem Lenker (27, 28) angelenkt sind, der beim entgegengesetzten Ende am Maschinengehäuse (23) drehbar gelagert ist, womit der Pleuelbolzen (17) über den gesamten Hubbereich der Maschine mindestens annähernd parallel geführt ist.

## Claims

1. Apparatus for the balancing of mass forces in a machine having a crankshaft drive with rods, specifically a punching machine having balancing weights (10, 11) located at both sides of the crankshaft drive, in which machine first rods (1, 2) are pivotally mounted to one end of single arm levers (18, 19), of which the respective other ends are pivotally supported at the machine frame (23) and which include each an intermediate bearing (20′) which is pivotally mounted via pressing rods (20) to the punch (34) of the machine, which balancing weights (10, 11) for balancing the oscillating and the component of the rotating mass forces directed in the direction of the stroke of the machine are pivotally mounted at one end to reversing levers (5, 6) pivotally mounted to the machine frame (23) which in turn at their respective opposite ends are pivotally mounted to second rods (3, 4) driving same, characterized in that for the balancing of the component of the rotating mass forces directed perpendicularly to the direction of stroke the balancing weights (10, 11), in order to execute an oscillating movement perpendicularly to the direction of the stroke are pivotally mounted at the opposite end via a respective link rod (30) to a respective first rod (1, 2) at a point located relative to the pivotal point of the single arm levers (18, 19) opposite of the crankshaft drive of the for this reason lengthened first rods (1, 2), that each reversing lever (5, 6) is pivotally mounted to a respective own second rod (3, 4), such that the reversing levers (5, 6) are driven independently of each other, and in that all first and second rods (1-4) are supported on a common eccentric sleeve of the crankshaft drive.

2. Apparatus according to claim 1, characterized in that the first rods (1, 2) are forked at their end supported on the common eccentric sleeve (16) and the second rods (3, 4) are supported on the eccentric sleeve (16) between the legs present due to the forked structure of the first rods (1, 2).

3. Apparatus according to claim 1 or 2, characterized in that the first rods (1, 2) are supported for a parallel guiding on a journal pin (17), to which one end of the respective single arm levers (18, 19) is pivotally mounted, which journal pin (17) is supported at both sides in a respective reversing lever (25), which levers are mounted at diametrically opposite ends to respective link rods (27, 28) which at their opposite ends are pivotally supported at the machine frame, wherewith the journal pin (17) is guided at least substantially parallel within the entire stroke range of the machine.

## Revendications

1. Dispositif pour l'équilibrage des forces dues aux masses dans une machine présentant une transmission à manivelle avec des bielles, en particulier une machine à poinçonner comportant des poids d'équilibrage (10, 11) disposés des deux côtés de la transmission à manivelle, machine dans laquelle des premières bielles (1, 2) sont articulées sur une extrémité de leviers à bras unique (18, 19), dont l'autre extrémité prend un appui articulé sur le bâti (23) de la machine et qui présentent chacun un palier intermédiaire (20′) qui est articulé, par l'intermédiaire de colonnes de transmission de pression (20), sur le coulisseau (34) de la machine, lesquels poids d'équilibrage (10, 11) sont articulés par une extrémité, en vue de l'équilibrage des forces oscillantes et des composantes dirigées dans la direction de la course de la machine des forces rotatives dues aux masses, sur des leviers de renvoi (5, 6) qui sont montés pivotants dans le bâti (23) de la machine et qui sont articulés de leur côté, par les extrémités respectivement opposées, sur des secondes bielles (3, 4) qui les entraînent, caractérisé en ce que, pour l'équilibrage des composantes des forces rotatives dues aux masses, composantes dirigées perpendiculairement à la direction de la course, les poids d'équilibrage (10, 11) sont articulés chacun, par l'extrémité opposée et par l'intermédiaire de biellettes respectives (30), en vue de l'exécution d'un mouvement oscillant perpendiculaire à la direction de la course, sur une première bielle (1, 2) en un point de cette première bielle (1, 2), prolongée à cette fin, qui est à l'opposé de la transmission à manivelle par rapport au point d'articulation des leviers à bras unique (18, 19), en ce que chaque levier de renvoi (5, 6) est articulé sur sa propre seconde bielle (3, 4), de sorte que les leviers de renvoi (5, 6) soient entraînés indépendamment l'un de l'autre, et en ce que toutes les premières et secondes bielles (1-4) sont montées sur un coussinet d'excentrique commun (16) de la transmission à manivelle.

2. Dispositif selon la revendication 1, caractérisé en ce que les premières bielles (1, 2) sont fourchues dans la partie montée sur le coussinet d'excentrique commun (16) et les secondes bielles (3, 4) sont montées chacune sur le coussinet d'excentrique (16) entre les branches jumelles de la fourche des premières bielles (1, 2) .

3. Dispositif selon la revendication 1 ou 2, caractérisé en ce qu'en vue de leur guidage parallèle, les premières bielles (1, 2) sont montées sur un axe de bielle (17) sur lequel est articulée l'une des extrémités des leviers à bras unique respectifs (18, 19), lequel axe de bielle (17) est monté des deux côtés dans des leviers réversibles respectifs (25) qui sont articulés, par les extrémités diamétralement opposées, sur des biellettes respectives (27, 28) qui sont montées à rotation, par leur extrémité opposée, sur le bâti (23) de la machine, ce qui fait que l'axe de bielle (17) est guidé de façon au moins approximativement parallèle sur toute l'étendue de la course de la machine.
